# EUROPÄISCHE PATENTSCHRIFT

(11) **EP 2 288 004 B1**
(45) Veröffentlichungstag und Bekanntmachung des Hinweises auf die Patenterteilung: **17.05.2017**
(21) Anmeldenummer: 09168157.7
(22) Anmeldetag: 19.08.2009
(51) Int. Cl.: H02K 15/00, H02K 17/20

(54) **Käfigläufer mit Anlaufstab**
Cage rotor with start-up rod
Cage d'écureuil dotée d'une tige de démarrage

(43) Veröffentlichungstag der Anmeldung: 23.02.2011
(73) Patentinhaber: Siemens Aktiengesellschaft, 80333 München (DE)
(72) Erfinder: Büttner, Klaus, 97618 Hollstadt (DE); Kirchner, Klaus, 97645 Ostheim (DE); Müller, Michael, 97688 Bad Kissingen (DE)

(56) Entgegenhaltungen:
- DE-A1- 2 756 685
- DE-A1- 4 308 683
- DE-A1- 19 901 195
- JP-A- 10 234 166

## Beschreibung

Die Erfindung betrifft einen Käfigläufer für eine Asynchronmaschine gemäß dem Oberbegriff des Patentanspruchs 1, der Anlaufstäbe zur Verbesserung des Anlaufverhaltens umfasst. Ferner betrifft die Erfindung ein Verfahren gemäß dem Oberbegriff des Patentanspruchs 11 zur Herstellung eines derartigen Käfigläufers.

Aus der JP 1028360 A ist eine Käfigläufer bekannt, bei dem Betriebsstäbe aus Kupfer in Nuten eines Läuferblechpakets derart eingelegt werden, dass diese am radial innengerichteten Nutgrund des Läuferblechpakets anliegen und ein nicht mit den Betriebsstäben gefüllter Re.stquerschnitt im radial außen liegenden Bereich der Nuten verbleibt. Dieser Restquerschnitt wird in einem Druckgussprozess mit Aluminiumschmelze aufgefüllt. Nach dem Aushärten der Schmelze bilden sich so Anlaufstäbe aus Aluminium, die materialbedingt einen höheren elektrischen Widerstand haben als die Betriebsstäbe aus Kupfer.

Bedingt durch den Skin- und Proximity-Effekt wird der Sekundärstrom einer Asynchronmaschine während des Anlaufens der Maschine in Richtung des äußeren Nutbereichs verdrängt. Da in diesem äußeren Nutbereich die Anlaufstäbe aus Aluminium angeordnet sind, erfährt die Asynchronmaschine während des Anlaufens einen höheren Widerstand, was sich wiederum günstig auf das Drehmomentverhalten der Maschine auswirkt. Sobald die Maschine ihre Nenndrehzahl erreicht hat, fließt der Sekundärstorm im Wesentlichen in dem besser leitfähigen Betriebsstab aus Kupfer. Hierdurch wird wiederum der Wirkungsgrad der Asynchronmaschine positiv beeinflusst.

Verbreitet sind bei Käfigläufern mit Betriebs- und Anlaufstäben auch so genannte Doppelstabnuten, bei denen eine radial betrachtet innen liegende Nut für einen Betriebsstab aus einem leitfähigeren Material vorgesehen ist und eine in radialer Richtung betrachtet außen liegende Nut für einen schlechter leitenden Anlaufstab. Die beiden Nuten sind durch einen Streusteg voneinander getrennt.

Die JP 10 234166 A beschäftigt sich mit der Verbesserung der Eigenschaften eines Motors mit einem Käfigläufer. Gemäß der JP 10 234166 A wurden bisher aus Kostengründen die Betriebstäbe und die Kurzschlussringe aus Aluminium druckgegossen oder bei effizienten Asynchronmotoren aus Kupfer druckgegossen. Gemäß der JP 10 234166 A sind auch Käfigläufer bekannt, bei denen sowohl Kupfer als auch Aluminium für die Betriebsstäbe und die Kurzschlussringe eingesetzt werden. Dabei wird der Widerstand der Betriebsstäbe bei Verwendung von Aluminium und Kupfer reduziert. Aber obwohl die Verbindung von Kupfer und Aluminium gut ist, ist dies bei Kupfer und druckgegossenen Aluminium nicht der Fall. Davon ausgehend beschäftigt sich die JP 10 234166 A zum einen damit eine sichere Verbindung zwischen den Kupfer und dem Aluminium zu erreichen, um als erste Aufgabe einen Rotor mit kleinem Widerstand zur Verfügung zu stellen. Die erste Aufgabe wird dadurch gelöst, dass die Verbindung zwischen den Kupfer und dem druckgegossenen Aluminium durch eine Aluminiumbeschichtung der Stäbe vor dem Druckgießen verbessert wird. Als weitere zweite Aufgabe wird angegeben, einen Rotor zur Verfügung zu stellen, bei dem eine sichere Verbindung zwischen dem Kupfer und dem Aluminium erreicht wird und das Anlaufmoment nicht reduziert ist. Der zweite Zweck wird dadurch erreicht, dass die Aluminiumbeschichtung an der peripheren Seite der Nut dicker ist als an der inneren Seite.

Aus der DE 43 08 683 A1 ist ein Käfigläufer, der ein Blechpaket mit Nuten umfasst, in die zunächst Kurzschlussstäbe aus Kupfer eingeschoben werden. Stirnseitig werden die Kupferstäbe durch Kurzschlussringe miteinander verbunden. Diese Kurzschlussringe werden durch ein Druckgussverfahren aus Aluminium hergestellt. Beim Vergießen der Kurzschlussringe wird gleichzeitig der in den Nuten gegenüber den eingesetzten Kupferstäben verbleibende Restquerschnitt mit Aluminium ausgegossen, so dass die Kurzschlussringe mit den in dem Restquerschnitt gebildeten druckgegossenen Stabteilen verbunden werden.

Weiterer Stand der Technik ist aus der DE 27 56 685 A1 bekannt, die einen Läufer für Asynchronmaschinen betrifft.

Der Erfindung liegt die Aufgabe zugrunde, einen Käfigläufer für eine Asynchronmaschine mit einem guten Anlaufverhalten und einem hohen elektrischen Wirkungsgrad anzugeben.

Diese Aufgabe wird durch einen Käfigläufer für eine Asynchronmaschine mit den Merkmalen des Anspruchs 1 gelöst.

Ferner gelingt die Lösung der Aufgabe durch ein Verfahren zur Herstellung eines Käfigläufers mit den Merkmalen nach Patentanspruch 11.

Der Erfindung liegt die Erkenntnis zugrunde, dass der elektrische Wirkungsgrad der Asynchronmaschine bei einem Doppelstabläufer ohne nennenswerte Beeinflussung des Anlaufverhaltens deutlich verbessert werden kann, wenn der Betriebsstab mit einer höheren Stabhöhe ausgeführt wird, so dass dieser weit in Richtung des Rotordurchmesser nach außen in die Nut hineinreicht. Genau dies wird dadurch erreicht, dass die radial betrachtet außen liegende Fläche der Betriebsstäbe mit der Teilummantelung aus dem elektrisch schlechter leitenden Material ummantelt wird. Denn während des Anlaufmoments, in dem verhältnismäßig hochfrequente Ströme im Läufer fließen, fließt der Sekundärstrom ohnehin nur in einem relativ eng begrenzten Bereich der Nut, der dem Außendurchmesser des Käfigläufers zugewandt ist. Durch den Skin-Effekt und durch den Proximity-Effekt konzentriert sich der Strom auf diese Mantelfläche, die die Betriebsstäbe an ihren radial betrachtet außen liegenden Flächen umgibt. Erfindungsgemäß wird also der größtmögliche Teil der Nutfläche dem Betriebsstab zur Verfügung gestellt, ohne dem Anlaufmoment einen signifikanten Stromfluss innerhalb des Betriebsstabs zuzulassen. Im Vergleich zu einer herkömmlichen Doppelstabnut wird also erfindungsgemäß der Betriebsstab bis in den Bereich des Anlaufstabs nach herkömmlicher Bauweise herausgeführt, ohne dass hierbei das Anlaufverhalten negativ beeinflusst wird. Im Betrieb nach dem Hochlauf der Asynchronmaschine steht auf diese Art und Weise ein möglichst hoher Stab, der Betriebsstab aus dem elektrisch leitfähigeren Material, zur Verfügung, so dass im Nennbetrieb ein sehr hoher Wirkungsgrad erzielt werden kann. Hingegen ist der aus dem Stand der Technik bekannte Anlaufstab auf die Gestalt einer Teilummantelung reduziert, deren Querschnitt dem Stromdichteprofil im Anlaufbetrieb entspricht. Idealerweise wird eine Querschnittsfläche für die Teilummantelung gewählt, die während des Anlaufs der Asynchronmaschine im Wesentlichen den Strom tragen würde, wenn

die komplette Nut mit dem Material der Teilummantelung gefüllt wäre.

Ein hoher Nutfüllfaktor führt ebenfalls zu einem hohen elektrischen Wirkungsgrad, so dass eine Ausgestaltung der Erfindung vorteilhaft ist, bei der die teilummantelten Betriebsstäbe die Nuten vollständig ausfüllen.

Eine Formgebung des Betriebsstabs und der Teilummantelung, die in vorteilhafter Ausgestaltung der Erfindung das gewünschte Hereinragen des Betriebsstabs in den radial außen liegenden Nutbereich bewirkt, kennzeichnet sich dadurch, dass die Teilummantelung konkav an der dem Betriebsstab zugewandten und konvex an der dem Betriebsstab abgewandten Seite geformt ist.

Ein hoher Wirkungsgrad insbesondere während des Nennbetriebs und ein hohes Kurzschlussmoment kann bei einer Ausführungsform der Erfindung dadurch erzielt werden, dass das Material der Betriebsstäbe Kupfer und das Material der Teilummantelung Aluminium ist. Aluminium hat zudem den Vorteil, dass es eine niedrige spezifische Massendichte aufweist und somit das Massenträgheitsmoment des Käfigläufers reduziert werden kann.

Ferner weist der Käfigläufer vorzugsweise Kurzschlussringe aus dem Material der Teilummantelung auf, die die Betriebsstäbe und die Teilummantelungen der Betriebsstäbe an beiden Stirnseiten des Käfigläufers elektrisch miteinander kontaktieren. Bei einer Ausführungsform der Erfindung, bei der die Teilummantelung aus Aluminium besteht, sind entsprechend dieser Ausgestaltungsform auch die Kurzschlussringe aus Aluminium gefertigt. Insbesondere im Bereich der Kurzschlussringe ist der effektive Leiterquerschnitt vergleichsweise groß, so dass hier der geringere spezifische Leitwert von Aluminium im Vergleich zu Kupfer nicht so ausschlaggebend für den Wirkungsgrad der Asynchronmaschine ist. Hingegen wird die Masse des Käfigläufers durch diese Materialwahl relativ gering gehalten, so dass die Asynchronmaschine insbesondere für einen dynamischen Einsatzbereich gut gerüstet ist.

Ein Käfigläufer, nicht Teil der Erfindung, bei dem die Kurzschlussringe aus demselben Material wie die Teilummantelungen gefertigt sind, lässt sich in weiterer vorteilhafter Ausgestaltung der Erfindung dadurch sehr einfach realisieren, dass die Teilummantelungen und die Kurzschlussringe aus einer Metallschmelze gegossen sind. Bestehen beispielsweise die Kurzschlussringe und die Teilummantelungen aus Aluminium, so kann ein derartiger Käfigläufer relativ kostengünstig insbesondere für kleinere elektrische Maschinen mittels eines Aluminium-druckgussprozesses gefertigt werden. Für die Betriebsstäbe bietet sich hierbei Kupfer als Material an.

Insbesondere bei Verwendung einer Aluminiumschmelze und Betriebsstäben aus Kupfer gestaltet es sich weiterhin als vorteilhaft, die Betriebsstäbe zumindest an den Stabenden, an denen die Kurzschlussringe angeordnet sind, vor dem Gussprozess zu verzinnen. Hierdurch wird eine mechanische und elektrische Anbindung der Betriebsstäbe an die Kurzschlussringe geschaffen, die auch den im Betrieb auftretenden thermischen Zyklen standhält. Werden die verzinnten Stabenden der Kupferbetriebsstäbe mit der Aluminiumschmelze in Kontakt gebracht, so wird die so geschaffene Beschichtung aufgeschmolzen. Beim Erstarren der Aluminiumschmelze bildet sich zwischen der Schmelze, die die Kurzschlussringe bildet, und den Betriebsstäben eine mischkristalline Legierungsschicht aus, die durch extrem hohe Bindungskräfte zwischen den Betriebsstäben und den Kurzschlussringen zur Folge hat.

Ein ähnlicher Effekt kann alternativ durch eine Ausführungsform der Erfindung erzielt werden, bei der die Betriebsstäbe zumindest an den Stabenden, an denen die Kurzschlussringe angeordnet sind, eine galvanisch aufgebrachte Beschichtung aufweisen, wobei die Beschichtung das Material der Kurzschlussringe umfasst. Bei Verwendung einer Aluminiumschmelze wird hierbei eine Aluminiumschicht vor einem Druckgussprozess galvanisch aufgebracht. Auch hierbei stellt sich die bereits zuvor beschriebene Legierungsschicht nach dem Erstarren der Schmelze ein.

Ein weiteres Beispiel eines des Käfigläufers, nicht Teil der Erfindung kennzeichnet sich dadurch, dass die Betriebsstäbe als insbesondere genormte Flachstangen ausgeführt sind. Durch eine spezielle Nutgeometrie kann zweckmäßigerweise dafür Sorge getragen werden, dass diese Flachstangen am radial innengerichteten Nutgrund unmittelbar am Läuferblechpaket anliegen. Insbesondere bei Verwendung eines Druckgussverfahrens zur Ausbildung der Teilummantelung und der Kurzschlussringe ist es weiterhin vorteilhaft, wenn jede Nut hierzu im unteren Bereich Flächen aufweist, die zur Fixierung der Flachstange vor dem Vergießen geeignet sind. Durch derartige Flächen kann verhindert werden, dass sich die Flachstangen vor dem Druckguss verkippen und sich dadurch ein unsymmetrischer Aufbau ergibt. Insbesondere dann, wenn es sich um genormte Flachstangen handelt, kann eine sehr enge Passung zwischen der Flachstange und dem radial innen liegenden Nutbereich gewählt werden, da genormte Flachstangen hinsichtlich ihrer Breitentoleranz sehr eng toleriert sind. Sind die Nuten des Läuferblechpakets zunächst derartig mit den Flachstangen bestückt, wird der Rest der Nutfläche mit Druckguss ausgefüllt, so dass sich die für das Anlaufverhalten günstige Teilummantelung im radial außen gerichteten Bereich der Nut ergibt. Die Verwendung eines Druckgussprozesses hat hierbei den Vorteil, dass die Flachstangen tief in den Nutgrund hineingedrückt werden, so dass die Flachstangen bezüglich aufkommender Schwingungen und Kräftebeanspruchung im Läuferblechpaket zuverlässig befestigt sind.

Im Folgenden wird die Erfindung anhand der in den Figuren dargestellten Ausführungsbeispiele näher beschrieben und erläutert. Es zeigen:
- FIG 1: eine aus dem Stand der Technik bekannte Doppelstabnut,
- FIG 2: einen ummantelter Betriebsstab gemäß einer Ausführungsform, nicht Teil der Erfindung,
- FIG 3: den Betriebsstab nach FIG 2 während eines Anlaufvorganges,
- FIG 4: den Betriebsstab nach FIG 2 bei einem Betrieb mit Nenndrehzahl,
- FIG 5: einen ummantelter Betriebsstab gemäß einer Ausführungsform der Erfindung während eines Anlaufvorganges,
- FIG 6: den Betriebsstab nach FIG 5 bei einem Betrieb mit Nenndrehzahl,
- FIG 7: eine mit einer Normflachstange bestückte Doppelstabnut,
- FIG 8: die Doppelstabnut nach FIG 7 nach einem Aluminiumdruckgussprozess,
- FIG 9: eine von der Teilummantelung auf den Betriebsstab ausgeübte Druckwirkung,
- FIG 10: zwei benachbarte Doppelstabnuten gemäß der Ausgestaltung nach FIG 7,
- FIG 11: die Stromverteilung in der Doppelstabnut während eines Anlaufvorganges,
- FIG 12: eine Schnittdarstellung eines mit ummantelten Betriebsstäben bestückten Läuferblechpaketes nach einem Druckgussprozess und
- FIG 13: eine mit einem Käfigläufer nach einer Ausführungsform der Erfindung ausgestattete Asynchronmaschine.

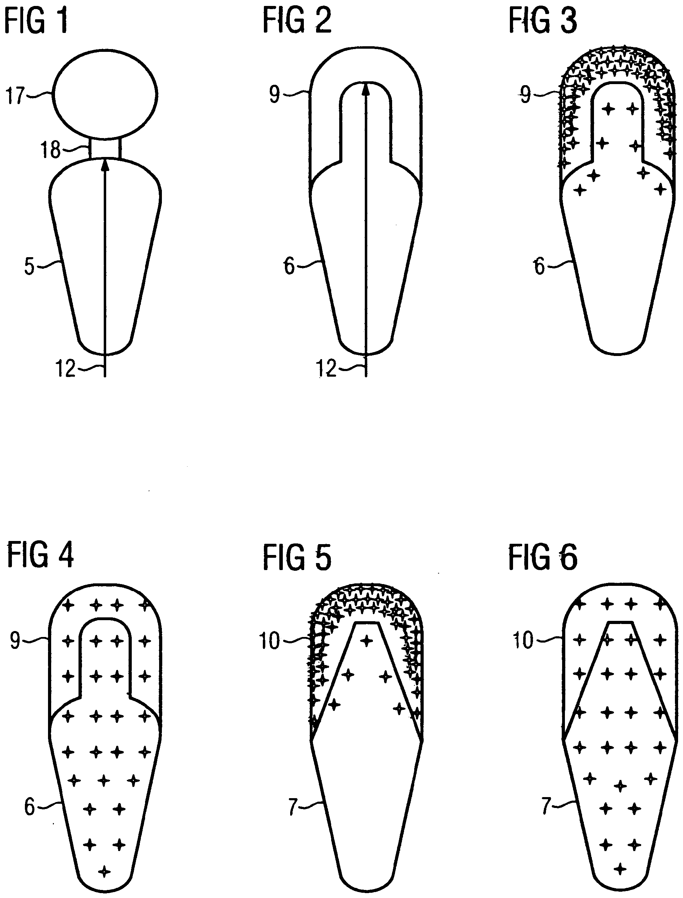

Figur 1 zeigt eine aus dem Stand der Technik bekannte Doppelstabnut. Diese Doppelstabnut ist in einem Käfigläufer einer Asynchronmaschine angeordnet. Hierbei deutet der Pfeil eine radiale Richtung 12 an, die von der Maschinenwelle zum Außenumfang des Käfigläufers weist. Radial innen gerichtet ist hier sowie in der gesamten Anmeldung also als eine Richtung zu verstehen, die vom Käfigaußenmantel radial zu dessen Rotationsachse weist. Radial außen gerichtet ist demnach als eine Richtung anzusehen, die von der Rotationsachse des Käfigläufers radial zum Käfigaußenmantel weist.

Die Doppelstabnut umfasst zwei Nutbereiche. Ein erster Nutbereich ist in radialer Richtung 12 betrachtet innen angeordnet und wird von einem Betriebsstab 5 gefüllt. Dieser Betriebsstab 5 ist aus Kupfer und besitzt daher einen guten elektrischen Leitwert.

Im radial außen liegenden Bereich befindet sich ein Anlaufstab 17 aus Aluminium. Aluminium besitzt gegenüber Kupfer den niedrigeren spezifischen Leitwert. Aufgrund des Skin-Effektes und des Proximity-Effektes wird während des Anlaufens der Asynchronmaschine der Stromfluss im Wesentlichen in den in radialer Richtung 12 betrachtet außen liegenden Bereichen der Nuten stattfinden. Dementsprechend wird während des Anlaufvorgangs, bei dem verhältnismäßig hochfrequente Ströme im Käfigläufer fließen, in erster Linie der Strom durch die Anlaufstäbe 17 geführt. Hierdurch besitzt der Käfigläufer während des Anlaufens einen höheren effektiven ohmschen Widerstand, was sich positiv auf das Anlaufmoment der Asynchronmaschine auswirkt. Mit zunehmender Drehzahl lässt die auf den Skin- bzw. Proximityeffekt zurückzuführende Stromverdrängung mehr und mehr nach. Der Strom kommutiert daher zunehmend auf die Betriebsstäbe um. Der ohmsche Widerstand des Käfigläufers nimmt daher mit zunehmender Maschinendrehzahl ab, wodurch der Wirkungsgrad der Maschine erhöht wird.

Die Betriebsstabnut und die Anlaufstabnut sind über einen sehr schmalen Steg 18 voneinander getrennt. Der Steg 18, der auch als Streusteg bezeichnet wird, verkleinert die für den Stromfluss im Anlaufmoment vorhandene effektive Fläche. Auch hierdurch wird der Widerstand erhöht und somit das Anlaufverhalten der Maschine verbessert. Es ist jedoch offensichtlich, dass durch diese Methode der Wirkungsgrad des Motors zugunsten des Anlaufverhaltens erheblich reduziert wird, da der Betriebsstab 5 nicht die größtmögliche Fläche aufweist, die man sich im Nennbetrieb der Asynchronmaschine wünschen würde. Die dargestellte Doppelstabnut stellt entsprechend einen Kompromiss zwischen Anlaufverhalten mit hohem Drehmoment und elektrischem Wirkungsgrad dar.

Figur 2 zeigt einen ummantelten Betriebsstab 6 gemäß einer Ausführungsform, nicht Teil der Erfindung. Auch hier ist die radiale Richtung 12 von der Achse des Käfigläufers durch einen Pfeil angezeigt. Der Betriebsstab 6 liegt im radial innen liegenden Nutgrund unmittelbar am Läuferblechpaket der Asynchronmaschine an. Es handelt sich um einen Kupferstab, der einen hohen spezifischen elektrischen Leitwert aufweist. Dieser Betriebsstab 6 zeichnet sich durch eine besondere Formgebung aus. So besitzt der Betriebsstab 6 eine Auswölbung, die in den radial betrachtet äußeren Nutbereich hineinragt. Die Seitenflächen dieser Auswölbung sind mit einer Teilummantelung 9 ummantelt. Bei dieser Teilummantelung 9 handelt es sich um eine erstarrte Aluminiumschmelze, die mittels eines Aluminium-Druckgussprozesses appliziert wurde. Hierzu wurde zunächst das Läuferblechpaket mit den Betriebsstäben 6 bestückt und in eine Druckgussform gegeben. Anschließend wurden in einem Aluminium-Druckgussprozess Kurzschlussringe an das Läuferblechpaket angegossen und gleichzeitig der in den Nuten verbleibende Freiraum mit Aluminiumschmelze ausgefüllt. Nach dem Erstarren der Schmelze bilden sich somit die dargestellten Teilummantelungen 9, die aufgrund der Materialwahl einen höheren spezifischen elektrischen Widerstand aufweisen als die Betriebsstäbe selbst.

Figur 3 zeigt den Betriebsstab 6 nach Figur 2 während eines Anlaufvorgangs der Asynchronmaschine. Es ist deutlich zu erkennen, dass aufgrund des Skin- und Proximity-Effektes der Strom nahezu vollständig in der Teilummantelung 9 fließt. Hierdurch "sieht" der Strom einen höheren effektiven elektrischen Widerstand des Käfigläufers, wodurch das Anlaufdrehmoment der Maschine erhöht wird. Die erwähnten Stromverdrängungseffekte haben eine Stromverteilung zur Folge, die im Wesentlichen mit der Form der Teilummantelung 9 korrespondiert. Die Teilummantelung 9 ist konkav an der dem Betriebsstab 6 zugewandten Seite geformt. Es ergibt sich hierdurch eine Art Haubenform, die den in den äußeren Nutbereich hereinragenden Zapfen des Betriebsstabs 6 umschließt. Selbst wenn, wie aus dem Stand der Technik bekannt, der komplette äußere Nutbereich mit dem Material der Anlaufstäbe, in der Regel Aluminium, gefüllt wäre, so würde in diesem zapfenförmigen Bereich ohnehin während des Anlaufens kaum Strom fließen. Entsprechend wird durch den dargestellten Betriebsstab 6 mit der haubenförmigen Teilummantelung 9 auf geschickte Art und Weise eine maximale Kupferfläche für den Nennbetrieb bereitgestellt und somit der elektrische Wirkungsgrad so hoch wie möglich gehalten, ohne auf die durch Anlaufstäbe erzielbare Verbesserung des Anlaufverhaltens verzichten zu müssen.

So zeigt Figur 4 den Betriebsstab nach Figur 2 bei einem Betrieb mit Nenndrehzahl. Aufgrund des höheren elektrischen Leitwerts des Betriebsstabs 6 wird der Strom nun hauptsächlich in diesem Betriebsstab 6 fließen, da die Stromverdrängung kaum noch in Erscheinung tritt. Da die Gesamtquerschnittsfläche der Nut in erster Linie durch Kupfer gefüllt ist, ergibt sich ein sehr guter Leitwert und somit ein hoher elektrischer Wirkungsgrad.

Figur 5 zeigt einen ummantelten Betriebsstab 7 gemäß der Erfindung während eines Anlaufvorgangs. Hier ragt der Betriebsstab 7 in etwa spitzdachförmig in den äußeren Nutbereich hinein. Auch hier ist der Anlaufstab in Form einer Teilummantelung 10 realisiert, die diese spitzdachförmige Auswölbung umschließt. Auch diese Teilummantelung 10 ist aus einer Aluminiumschmelze mittels eines Druckgussverfahrens hergestellt worden.

Auch eine solche Nutfüllung zeigt, wie in Figur 5 zu erkennen ist, eine effektive Verbesserung des Anlaufverhaltens bei maximaler Kupferfüllung der Nut.

Wie in Figur 6 zu erkennen ist, steht auch hier im Normalbetrieb eine vergleichsweise große Kupferfläche für den Stromfluss zur Verfügung, so dass auch bei einem solchen Käfigläufer ein hoher Wirkungsgrad im Nennbetrieb erzielt werden kann.

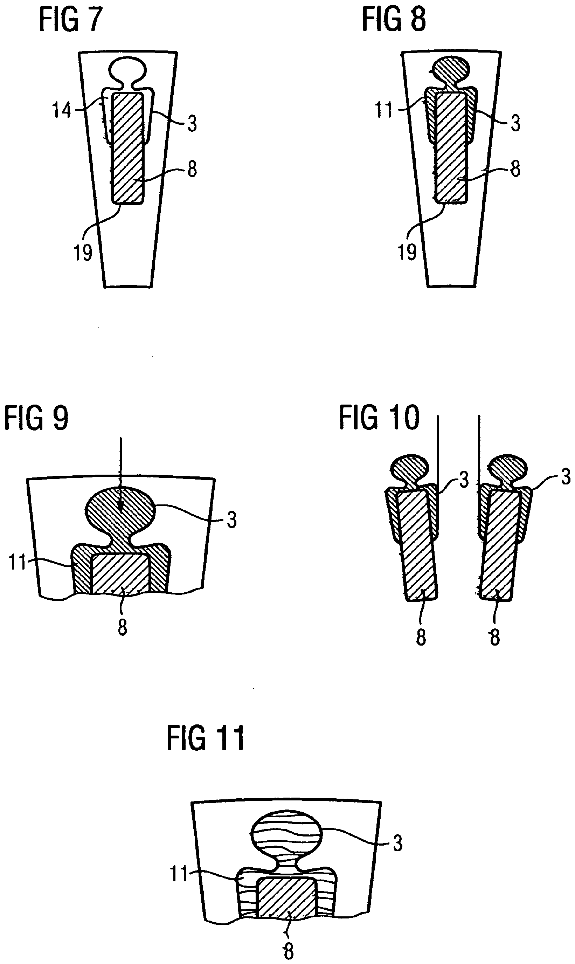

Figur 7 zeigt eine mit einer Normflachstange bestückte Doppelstabnut. Diese Nut 3 ist derart ausgelegt, dass die Normflachstange, die die Funktion eines Betriebsstabs 8 erfüllt, nahezu spielfrei in die Nut 3 eingeführt werden kann. Hierbei ist die Normflachstange so in der Nut angeordnet, dass sie unmittelbar am radial innen liegenden Nutgrund 19 anliegt. Nach dem Bestücken der Nut 3 mit der Normflachstange verbleibt ein Freiraum 14 in der Nut 3. Dieser Freiraum 14 ist um den in radialer Richtung betrachtet außen liegenden Teil der Normflachstange angeordnet. Auch die Normflachstange ist in Kupfer ausgeführt.

Figur 8 zeigt die Doppelstabnut nach Figur 7 nach einem Aluminium-Druckgussprozess. Nunmehr ist der Freiraum 14 mit Aluminiumschmelze ausgefüllt, die eine Teilummantelung 11 der Normflachstange im radial außen liegenden Bereich bildet.

Figur 9 zeigt eine von der Teilummantelung 11 auf den Betriebsstab 8 ausgeübte Druckwirkung, die während des Druckgussprozesses eintritt. Die Aluminiumschmelze drückt die Normflachstange gegen den radial betrachtet innen liegenden Nutgrund 19. Auf diese Art und Weise ist sichergestellt, dass die Normflachstange am innen liegenden Nutgrund 19 anliegt.

Figur 10 zeigt zwei benachbarte Doppelstabnuten gemäß der Ausgestaltung nach Figur 7. Die Nuten sind derart zueinander angeordnet, dass jeweils eine Seitenwand parallel zu einer Seitenwand der benachbarten Nut angeordnet ist. Auf diese Art und Weise bilden sich flussführende Zähne im Läuferblechpaket mit nahezu parallelen Seitenwänden aus. Dies wird durch die hochgezogenen Schultern der Nuten 3 im radial außen gerichteten Bereich bewirkt. Eine derartige Anordnung wirkt sich positiv auf die Flussverteilung innerhalb des Läuferblechpakets aus.

Figur 11 zeigt die Stromverteilung in der Doppelstabnut während eines Anlaufvorgangs. Die hier gewählte Nutform 11 besitzt im Gegensatz zu der aus den Figuren 2 und 3 gezeigten Form einen ausgeprägten Nutbereich für einen Anlaufstab. Dieser ausgeprägte Nutbereich ist noch auf die schulterförmigen Elemente der Teilummantelung 11 aufgesetzt und durch einen schmalen Steg mit diesen verbunden. Auf diesen ausgeprägten Anlaufnutbereich kann gegebenenfalls verzichtet werden, wenn eine kleinere Fläche für den Anlaufstrom ausreicht. Hierbei könnte die gewonnene Fläche für den Betriebsstab 8 verwendet werden, um den Wirkungsgrad der Maschine noch weiter zu erhöhen.

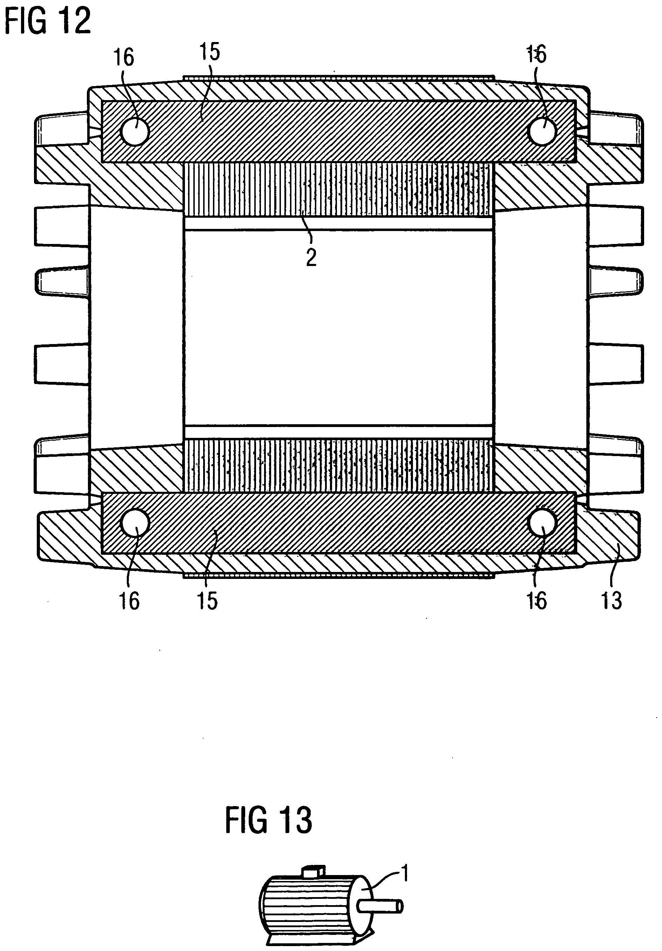

Figur 12 zeigt eine Schnittdarstellung eines mit ummantelten Betriebsstäben 15 bestückten Läuferblechpakets 2 nach einem Druckgussprozess mit Aluminium-Druckgussschmelze. Kurzschlussringe 13 sind an den Stirnseiten des Läuferblechpakets 2 mittels des Druckgussprozesses angegossen. Während dieses Aluminium-Druckgussprozesses werden gleichzeitig die Freiräume in den Nuten mit Aluminiumschmelze gefüllt, die nicht von den Betriebsstäben 15 eingenommen werden.

Um die Anbindung der Betriebsstäbe 15 an die Kurzschlussringe 13 zu verbessern, sind die in die Kurzschlussringe 13 hineinragenden Stabenden vor dem Druckgussprozess verzinnt worden. Diese verzinnte Schicht hat zur Folge, dass sich während der Applikation der heißen Aluminiumschmelze eine mischkristalline Verbindung zu den Stabenden bildet. Die verzinnte Schicht wird hierbei kurz aufgeschmolzen und bildet beim Erstarren der Schmelze die gewünschte Legierungsschicht. Zusätzlich sind Formschlussmittel 16 in Form von Durchgangslöchern im Bereich der Stabenden vorgesehen. Diese Durchgangslöcher werden während des Druckgussprozesses mit Aluminiumschmelze durchsetzt. Nach dem Erstarren der Schmelze wird auf diese Art und Weise ein Formschluss zwischen den Betriebsstäben 15 und den Kurzschlussringen 13 erzielt. Somit ist gewährleistet, dass auch während thermischer Zyklen, die der Läufer der Asynchronmaschine erfährt, eine gleichbleibend gute mechanische und elektrische Verbindung zwischen den Betriebsstäben 15 und den Kurzschlussringen 13 existiert. Der Übergangswiderstand zwischen den Stabenden und den Kurzschlussringen 13 kann hierdurch auch unter Belastung gering gehalten werden.

Figur 13 zeigt eine mit einem Käfigläufer nach einer Ausführungsform der Erfindung ausgestattete Asynchronmaschine 1. Diese Asynchronmaschine 1 ist aufgrund des Herstellungsverfahrens, bei dem ein Aluminium-Druckgussprozess verwendet wird, sehr preisgünstig und leicht herzustellen. Durch die Verwendung von Betriebsstäben aus Kupfer wird ein sehr hoher elektrischer Wirkungsgrad erreicht, mit dem sich Wirkungsgradnormen wie IE1, IE2 und sogar IE3 problemlos erreichen lassen. Auch höherwertige Wirkungsgradklassen, die zur Zeit der Erfindung noch nicht in der Norm EN60034 berücksichtigt sind, sind mit diesem Design realisierbar. Dies ist insbesondere darauf zurückzuführen, dass eine möglichst große Nutfläche für den Betriebsstab verwendet wird. Durch die im radial außen liegenden Nutbereich angeordneten Teilummantelungen wird trotzdem auf maximal effiziente Art und Weise das Anlaufverhalten der Maschine positiv beeinflusst.

## Patentansprüche

1. Käfigläufer für eine Asynchronmaschine (1), wobei der Käfigläufer umfasst:
ein Läuferblechpaket (2) mit Nuten (3) und
- in den Nuten (3) angeordnete Betriebsstäbe (5;6;7;8;15), die am in radialer Richtung des Käfigläufers betrachtet innen liegenden Nutgrund (9) unmittelbar am Läuferblechpaket (2) anliegen,
wobei die Betriebsstäbe (5;6;7;8;15) mit einer Teilummantelung (9;10;11) ummantelt sind, die eine in radialer Richtung (12) des Käfigläufers betrachtet außen liegende Fläche der Betriebsstäbe (5;6;7;8;15) ummanteln, wobei das Material der Betriebsstäbe (5;6;7;8;15) einen höheren spezifischen Leitwert als das Material der Teilummantelung (9;10;11) aufweist, wobei in Form der Teilummantelung (9;10;11) ein Anlaufstab realisiert ist,
**dadurch gekennzeichnet,**
**dass** die Betriebsstäbe (5;6;7;8;15) eine als Spitzdach ausgebildete Auswölbung aufweisen, wobei die Seitenflächen dieser Auswölbung mit der Teilummantelung (9;10;11) ummantelt sind, so dass die Betriebsstäbe (5;6;7;8;15) mit einer Stabhöhe ausgeführt sind, dass diese in radialer Richtung (12) nach außen in die Nuten hineinreichen.

2. Käfigläufer nach Anspruch 1,
wobei die teilummantelten Betriebsstäbe (5;6;7;8;15) die Nuten (3) vollständig ausfüllen.

3. Käfigläufer nach einem der Ansprüche 1 oder 2,
wobei die Teilummantelung (9;10;11) konkav an der dem Betriebsstab (5;6;7;8;15) zugewandten und konvex an der dem Betriebsstab (5;6;7;8;15) abgewandten Seite geformt ist.

4. Käfigläufer nach einem der vorhergehenden Ansprüche,
wobei das Material der Betriebsstäbe (5;6;7;8;15) Kupfer und das Material der Teilummantelung (9;10;11) Aluminium ist.

5. Käfigläufer nach einem der vorhergehenden Ansprüche, wobei der Käfigläufer Kurzschlussringe (13) aus dem Material der Teilummantelung (9;10;11) aufweist, die die Betriebsstäbe (5;6;7;8;15) und die Teilummantelungen (9;10;11) der Betriebsstäbe (5;6;7;8;15) an den beiden Stirnseiten des Käfigläufers elektrisch miteinander kontaktieren.

6. Käfigläufer nach Anspruch 5,
wobei die Teilummantelungen (9;10;11) und die Kurzschlussringe (13) aus einer Metallschmelze gegossen sind.

7. Käfigläufer nach Anspruch 6,
wobei die Betriebsstäbe (5;6;7;8;15) zumindest an den Stabenden, an denen die Kurzschlussringe (13) angeordnet sind, verzinnt sind.

8. Käfigläufer nach Anspruch 6,
wobei die Betriebsstäbe (5;6;7;8;15) zumindest an den Stabenden, an denen die Kurzschlussringe (13) angeordnet sind, eine galvanisch aufgebrachte Beschichtung aufweisen, wobei die Beschichtung das Material der Kurzschlussringe (13) umfasst.

9. Käfigläufer nach einem der vorhergehenden Ansprüche, wobei die Betriebsstäbe (5;6;7;8;15) als insbesondere genormte Flachstangen ausgeführt sind.

10. Asynchronmaschine (1) mit einem Ständer mit einer Ständerwicklung und einem Käfigläufer nach einem der vorhergehenden Ansprüche.

11. Verfahren zur Herstellung eines Käfigläufers für eine Asynchronmaschine (1) mit folgenden Verfahrensschritten:
- Einlegen von Betriebsstäben (5;6;7;8;15) in Nuten (3) eines Läuferblechpaketes (2) derart, dass die Betriebsstäbe (5;6;7;8;15) am in radialer Richtung (12) des Käfigläufers betrachtet innen liegenden Nutgrund (9) unmittelbar am Läuferblechpaket (2) anliegen und am in radialer Richtung (12) des Käfigläufers betrachtet außen liegenden Nutbereich ein Freiraum (14) verbleibt, der nicht von den Betriebsstäben (5;6;7;8;15) eingenommen wird,
- Druckgießen von stirnseitigen Kurzschlussringen (13) und einer Teilummantelung (9;10;11) der Betriebsstäbe (5;6;7;8;15) in jeder Nut (3), wobei die Teilummantelung (9;10;11) den Freiraum (14) vollständig ausfüllt und eine in radialer Richtung (12) des Käfigläufers betrachtet außen liegende Fläche der Betriebsstäbe (5;6;7;8;15) ummantelt, wobei in Form der Teilummantelung (9;10;11) ein Anlaufstab realisiert ist,
wobei als Metallschmelze ein Material verwendet wird, das einen geringeren spezifischen Leitwert als das Material der Betriebsstäbe (5;6;7;8;15) aufweist,
wobei die Betriebsstäbe (5;6;7;8;15) eine als Spitzdach ausgebildete Auswölbung aufweisen, wobei die Seitenflächen dieser Auswölbung mit der Teilummantelung (9;10;11) ummantelt sind, so dass die Betriebsstäbe (5;6;7;8;15) mit einer Stabhöhe ausgeführt sind, dass diese in radialer Richtung (12) nach außen in die Nuten hineinreichen.

12. Verfahren nach Anspruch 11,
wobei die Teilummantelung (9;10;11) konkav an der dem Betriebsstab (5;6;7;8;15) zugewandten und konvex an der dem Betriebsstab (5;6;7;8;15) abgewandten Seite geformt wird.

13. Verfahren nach Anspruch 11 oder 12,
wobei Betriebsstäbe (5;6;7;8;15) aus Kupfer und eine Metallschmelze aus Aluminium verwendet werden.

14. Verfahren nach einem der Ansprüche 11 bis 13,
wobei die Betriebsstäbe (5;6;7;8;15) zumindest an den Stabenden, an denen die Kurzschlussringe (13) angeordnet werden, vor dem Druckgießen verzinnt werden.

15. Verfahren nach einem der Ansprüche 11 bis 13,
wobei Betriebsstäbe (5;6;7;8;15) zumindest an den Stabenden, an denen die Kurzschlussringe (13) angeordnet werden, vor dem Druckgießen galvanisiert werden, um eine Beschichtung aus dem Material der Kurzschlussringe (13) aufzubringen.

## Claims

1. Cage rotor for an asynchronous machine (1), wherein the cage rotor comprises:
- a laminated rotor core (2) with grooves (3) and
- operating bars (5; 6; 7; 8; 15) arranged in the grooves (3), which at an inner groove base (9), as seen in the radial direction of the cage rotor, rest directly on the laminated rotor core (2),
wherein the operating bars (5; 6; 7; 8; 15) are clad with a partial cladding (9; 10; 11) which clads an outer surface of the operating bars (5; 6; 7; 8; 15) as seen in the radial direction (12) of the cage rotor, wherein the material of the operating bars (5; 6; 7; 8; 15) has a higher specific conductivity value than the material of the partial cladding (9; 10; 11), wherein a starting bar is realised in the shape of the partial cladding (9; 10; 11),
**characterised in that**
the operating bars (5; 6; 7; 8; 15) have a protrusion designed as a pitched roof, wherein the side surfaces of said protrusion are clad with the partial cladding (9; 10; 11), so that the operating bars (5; 6; 7; 8; 15) are embodied with a bar height such that said bars extend in the radial direction (12) outwards into the grooves.

2. Cage rotor according to claim 1,
wherein the partially clad operating bars (5; 6; 7; 8; 15) completely fill the grooves (3).

3. Cage rotor according to one of claims 1 or 2,
wherein the partial cladding (9; 10; 11) has a concave shape on the side facing towards the operating bar (5; 6; 7; 8; 15) and a convex shape on the side facing away from the operating bar (5; 6; 7; 8; 15).

4. Cage rotor according to one of the preceding claims, wherein the material of the operating bars (5; 6; 7; 8; 15) is copper and the material of the partial cladding (9; 10; 11) is aluminium.

5. Cage rotor according to one of the preceding claims, wherein the cage rotor has short-circuit rings (13) made from the material of the partial cladding (9; 10; 11) which provide electrical contact between the operating bars (5; 6; 7; 8; 15) and the partial cladding (9; 10; 11) of the operating bars (5; 6; 7; 8; 15) on the two end face sides of the cage rotor.

6. Cage rotor according to claim 5,
wherein the partial cladding (9; 10; 11) and the short-circuit rings (13) are cast from a metal melt.

7. Cage rotor according to claim 6,
wherein the operating bars (5; 6; 7; 8; 15) are tinned at least at the ends of the bars at which the short-circuit rings (13) are arranged.

8. Cage rotor according to claim 6,
wherein the operating bars (5; 6; 7; 8; 15) have an electrically-applied coating at least at the ends of the bars and which the short-circuit rings (13) are arranged, wherein the coating encloses the material of the short-circuit rings (13).

9. Cage rotor according to one of the preceding claims, wherein the operating bars (5; 6; 7; 8; 15) are embodied as especially standardised flat bars.

10. Asynchronous machine (1) with a stator and with a stator winding and a cage rotor according to one of the preceding claims.

11. Method for manufacturing a cage rotor for an asynchronous machine (1) with the following method steps:
- Insertion of operating bars (5; 6; 7; 8; 15) into grooves (3) of a laminated rotor core (2) such that, at the inner groove base (9) as seen in the radial direction (12), the operating bars (5; 6; 7; 8; 15) rest directly on the laminated rotor core (2)) of the cage rotor and a space (14) remains free at the outer groove area as seen in the radial direction (12) of the cage rotor, which is not occupied by the operating bars (5; 6; 7; 8; 15),
- Die casting of end face-side short-circuit rings (13) a partial cladding (9; 10; 11) of the operating bars (5; 6; 7; 8; 15) into each groove (3), wherein the partial cladding (9; 10; 11) completely fills the space (14) and clads an outer surface of the operating bars (5; 6; 7; 8; 15) as seen in the radial direction (12) of the cage rotor, wherein a starting bar is realised in the shape of the partial cladding (9; 10; 11),
wherein a material which has a lower specific conductivity value than the material of the operating bars (5; 6; 7; 8; 15) is used as metal melt,
wherein the operating bars (5; 6; 7; 8; 15) have a protrusion designed as a pitched roof, wherein the side surfaces of said protrusion are clad with the partial cladding (9; 10; 11), so that the operating bars (5; 6; 7; 8; 15) are embodied with a bar height such that said bars extend in the radial direction (12) outwards into the grooves.

12. Method according to claim 11,
wherein the partial cladding (9; 10; 11) has a concave shape on the side facing towards the operating bar (5; 6; 7; 8; 15) and a convex shape on the side facing away from the operating bar (5; 6; 7; 8; 15).

13. Method according to claim 11 or 12,
wherein operating bars (5; 6; 7; 8; 15) made of copper and a metal melt made of aluminium are used.

14. Method according to one of claims 11 to 13,
wherein the operating bars (5; 6; 7; 8; 15) are tinned, at least at the ends of the bars on which the short-circuit rings (13) are arranged, before the die casting.

15. Method according to one of claims 11 to 13,
wherein operating bars (5; 6; 7; 8; 15) are galvanised, at least at the ends of the bars on which the short-circuit rings (13) are arranged before the die casting, in order to apply a coating made of the material of the short-circuit rings (13).

## Revendications

1. Rotor à cage pour une machine (1) asynchrone, le rotor à cage comprenant :
- un paquet (2) de tôles rotoriques ayant des encoches (3) et
- des barres (5 ; 6 ; 7 ; 8 ; 15) de travail, qui sont disposées dans les encoches (3) et qui s'appliquent au paquet (2) de tôles rotoriques directement au fond (9) de l'encoche se trouvant vers l'intérieur considéré dans la direction radiale du rotor à cage,
dans lequel les barres (5 ; 6 ; 7 ; 8 ; 15) de travail sont enveloppées d'une enveloppe (9 ; 10 ; 11) partielle, qui enveloppe une surface, se trouvant vers l'extérieur considéré dans la direction (12) radiale du rotor à cage, des barres (5 ; 6 ; 7 ; 8 ; 15) de travail, le matériau des barres (5 ; 6 ; 7 ; 8 ; 15) de travail ayant une conductance spécifique plus grande que le matériau de l'enveloppe (9 ; 10 ; 11) partielle, une barre de démarrage étant réalisée sous la forme de l'enveloppe (9 ; 10 ; 11) partielle,
**caractérisé**
**en ce que** les barres (5 ; 6 ; 7 ; 8 ; 15) de travail ont une excroissance constituée sous la forme d'un toit pointu, les surfaces latérales de cette excroissance étant enveloppées de l'enveloppe (9 ; 10 ; 11) partielle, de sorte que les barres (5 ; 6 ; 7 ; 8 ; 15) de travail sont réalisées en ayant une hauteur telle que celles-ci atteignent dans les encoches l'extérieur dans la direction (12) radiale.

2. Rotor à cage suivant la revendication 1,
dans lequel les barres (5 ; 6 ; 7 ; 8 ; 15) de travail, enveloppées partiellement, remplissent complètement les encoches (3).

3. Rotor à cage suivant l'une des revendications 1 ou 2,
dans lequel l'enveloppe (9 ; 10 ; 11) partielle est concave du côté tourné vers la barre (5 ; 6 ; 7 ; 8 ; 15) de travail et convexe du côté éloigné de la barre (5 ; 6 ; 7 ; 8 ; 15) de travail.

4. Rotor à cage suivant l'une des revendications précédentes, dans lequel le matériau des barres (5 ; 6 ; 7 ; 8 ; 15) de travail est le cuivre et le matériau de l'enveloppe (9 ; 10 ; 11) partielle est l'aluminium.

5. Rotor à cage suivant l'une des revendications précédentes, dans lequel le rotor à cage a des anneaux (13) de court-circuit en le matériau de l'enveloppe (9 ; 10 ; 11) partielle, qui mettent les barres (5 ; 6 ; 7 ; 8 ; 15) de travail et les enveloppes (9 ; 10 ; 11) partielles des barres (5 ; 6 ; 7 ; 8 ; 15) de travail en contact les unes avec les autres électriquement sur les deux côtés frontaux du rotor à cage.

6. Rotor à cage suivant la revendication 5,
dans lequel les enveloppes (9 ; 10 ; 11) partielles et les anneaux (13) de court-circuit sont coulés en un métal fondu.

7. Rotor à cage suivant la revendication 6,
dans lequel les barres (5 ; 6 ; 7 ; 8 ; 15) de travail sont étamées au moins sur les barres où sont disposés les anneaux (13) de court-circuit.

8. Rotor à cage suivant la revendication 6,
dans lequel les barres (5 ; 6 ; 7 ; 8 ; 15) de travail ont, au moins sur les barres où sont disposés les anneaux (13) de court-circuit, un revêtement déposé galvaniquement, le revêtement comprenant le matériau des anneaux (13) de court-circuit.

9. Rotor à cage suivant l'une des revendications précédentes, dans lequel les barres (5 ; 6 ; 7 ; 8 ; 15) de travail sont réalisées sous la forme de barres plates, notamment normées.

10. Machine (1) asynchrone comprenant un stator ayant un enroulement et un rotor à cage suivant l'une des revendications précédentes.

11. Procédé de fabrication d'un rotor à cage pour une machine (1) asynchrone comprenant les stades de procédé suivants :
- insertion de barres (5 ; 6 ; 7 ; 8 ; 15) de travail dans des encoches (3) d'un paquet (2) de tôles rotoriques, de manière à ce que les barres (5 ; 6 ; 7 ; 8 ; 15) de travail s'appliquent directement au paquet (2) de tôles rotoriques, au fond (9) de la rainure se trouvant à l'intérieur considéré dans la direction (12) radiale du rotor à cage, et laissent, à la partie de l'encoche se trouvant à l'extérieur considéré dans la direction (12) radiale du rotor à cage, un espace (14) libre, qui n'est pas pris par les barres (5 ; 6 ; 7 ; 8 ; 15) de travail,
- coulée sous pression d'anneaux (13) de court-circuit du côté frontal et d'une enveloppe (9 ; 10 ; 11) partielle des barres (5 ; 6 ; 7 ; 8 ; 15) de travail dans chaque encoche (3), l'enveloppe (9 ; 10 ; 11) partielle remplissant complètement l'espace (14) libre et enveloppant la surface, se trouvant à l'extérieur considéré dans la direction (12) radiale du rotor à cage, des barres (5 ; 6 ; 7 ; 8 ; 15) de travail, une barre de démarrage étant réalisée sous la forme de l'enveloppe (9 ; 10 ; 11) partielle,
dans lequel on utilise comme métal fondu un matériau qui a une conductance spécifique plus petite que le matériau des barres (5 ; 6 ; 7 ; 8 ; 15) de travail,
dans lequel les barres (5 ; 6 ; 7 ; 8 ; 15) de travail ont une excroissance constituée sous la forme d'un toit pointu, les surfaces latérales de cette excroissance étant enveloppées de l'enveloppe (9 ; 10 ; 11) partielle, de sorte que les barres (5 ; 6 ; 7 ; 8 ; 15) de travail sont réalisées en ayant une hauteur telle que celles-ci atteignent dans les encoches l'extérieur dans la direction (12) radiale.

12. Procédé suivant la revendication 11,
dans lequel l'enveloppe (9 ; 10 ; 11) partielle est concave du côté tourné vers la barre (5 ; 6 ; 7 ; 8 ; 15) de travail et convexe du côté éloigné de la barre (5 ; 6 ; 7 ; 8 ; 15) de travail.

13. Procédé suivant la revendication 11 ou 12,
dans lequel on utilise des barres (5 ; 6 ; 7 ; 8 ; 15) de travail en cuivre et un métal fondu en aluminium.

14. Procédé suivant l'une des revendications 11 à 13,
dans lequel, avant la coulée sous pression, on étame les barres (5 ; 6 ; 7 ; 8 ; 15) de travail, au moins aux extrémités des barres où sont disposés les anneaux (13) de court-circuit.

15. Procédé suivant l'une des revendications 11 à 13,
dans lequel, avant la coulée sous pression, on galvanise les barres (5 ; 6 ; 7 ; 8 ; 15) de travail, au moins aux extrémités des barres où sont disposés les anneaux (13) de court-circuit, pour déposer un revêtement en les matériaux des anneaux (13) de court-circuit.
